(19) Europäisches Patentamt
European Patent Office
Office européen des brevets

(11) **EP 4 390 459 A1**

(12) **EUROPEAN PATENT APPLICATION**

(43) Date of publication:
**26.06.2024 Bulletin 2024/26**

(21) Application number: **22306982.4**

(22) Date of filing: **21.12.2022**

(51) International Patent Classification (IPC):
**G01S 17/10** (2020.01)    **G01S 17/894** (2020.01)
**G01S 7/4863** (2020.01)    **G01S 7/4865** (2020.01)
**G01S 7/487** (2006.01)    **G04F 10/00** (2006.01)

(52) Cooperative Patent Classification (CPC):
**G01S 17/10; G01S 7/4863; G01S 7/4865;**
**G01S 7/487; G01S 17/894;** G04F 10/005

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **STMICROELECTRONICS (GRENOBLE 2) SAS
38000 Grenoble (FR)**
• **STMicroelectronics (Research & Development)
Limited
Marlow SL7 1EY (GB)**

(72) Inventors:
• **DUTTON, Neale
EDINBURGH, EH10 6HA (GB)**
• **MELLOT, Pascal
38250 LANS EN VERCORS (FR)**
• **HRISTOVA, Ivelina
EDINBURGH, EH8 9QS (GB)**

(74) Representative: **Cabinet Beaumont
4, Place Robert Schuman
B.P. 1529
38025 Grenoble Cedex 1 (FR)**

Remarks:
Amended claims in accordance with Rule 137(2)
EPC.

(54) **OPTOELECTRONIC DEVICE WITH TIME-OF-FLIGHT SENSOR USING DYNAMIC TIME WINDOWS**

(57) The present disclosure relates to an optoelectronic device comprising: a light source configured to emit light pulses periodically; an array of pixels each configured to detect an amount of return light falling in each of a subset of two or more time intervals forming a detection time window of the pixel; and a time window position code generator (575) configured to generate a sequence of time window position codes; each pixel comprising: a memory (601) configured to store a first reference time window position; a time window code comparator (580A) configured to compare a first time window position code of said sequence with the first reference time window position; and a timing sequence generator (580B, 580C) configured to generate, when the comparison indicates a match, at least one time window control signal (g0, g1, g2, g3).

Fig 8A

**Description**

Technical field

The present disclosure relates generally to optoelectronic devices, and in particular to a time-of-flight sensor using dynamic time windows and related methods.

Background art

Optoelectronic devices comprising a time-of-flight (ToF) sensor can provide distance information for one or more objects in a three-dimensional (3D) environment. For example, ToF sensors may comprise an array of ToF pixels allowing a depth map image to be captured.

ToF detection generally involves projecting, by the optoelectronic device, light pulses into the 3D environment, and detecting the return time of these pulses in order to estimate the time-of-flight. The optoelectronic device for example comprises photodetectors in order to detect the return light pulses. For example, SPADs (single photon avalanche diodes) can be used as the photodetectors, and the number of SPAD detection events can be counted in order to determine the return signal. In order to have an acceptable SNR (signal to noise ratio), hundreds or thousands of light pulses are usually emitted periodically during a given detection phase, and a histogram is progressively constructed during this detection phase based on the timing of each SPAD event. The histogram is formed of time bins, each of which covers a specific time slot within the time period of the light pulses, such that the histogram data indicates an average timing of the return pulses over the detection phase. An analysis of the histogram data then permits an accurate estimation of the arrival time of the return pulses. By comparing this arrival time with the transmission time of the pulses, which is generally estimated using a reference array, the time-of-flight of the light pulses can be estimated. Knowing the speed of the light pulses, the distance of an object in the 3D environment can then be calculated as being equal to half the distance covered by the light pulses.

In order to accurately detect the timing of the return light pulses, the histogram bins each usually cover a relatively narrow time window, and tens or hundreds of bins are then needed for each ToF pixel of the array in order to be able to detect objects within a relatively broad range of distances.

A technical problem with such an approach is that the histogram bins consume a relatively large amount of power and chip area, and processing the large amount of histogram data is computationally costly. Furthermore, solutions based on this type of histogram are not scalable, because increasing the pixel density and the number of pixels in the array will lead to a corresponding increase in the chip area and power consumption required for implementing the histogram bins. While some solutions to this problem have been proposed based on trimming the amount of histogram data to be used for estimating the time-of-flight information, such solutions tend to have high power consumption, noise, and/or error rates.

Summary of Invention

According to one aspect, there is provided an optoelectronic device comprising: a light source configured to emit light pulses periodically; an array of pixels configured to detect an amount of return light, wherein each pixel of the array is configured to detect an amount of return light falling in each of a subset of two or more time intervals among a set of time intervals distributed across the time period of the pulses, the subset of two or more time intervals forming a detection time window of the pixel; and a time window position code generator configured to generate a sequence of time window position codes; each pixel comprising: a memory configured to store a first reference time window position associated with said pixel; a time window code comparator configured to compare a first time window position code of said sequence with the first reference time window position; and a timing sequence generator configured to generate, when the comparison indicates a match, at least one time window control signal configured to activate the detection of the return light during a detection time window selected by the at least one time window control signal.

According to one embodiment, the detection time window comprises a plurality of time intervals, and the timing sequence generator is configured to generate at least two of said time window control signals.

According to one embodiment, the detection time window comprises four time intervals A, B, C and D, wherein the time intervals A and C are non-overlapping with each other, the time intervals B and D are non-overlapping with each other, the time interval A is overlapping with the time intervals B and D, and the time interval C is overlapping with the time intervals B and D.

According to one embodiment, each pixel further comprises: a first up/down counter configured to be incremented during one of the intervals A and C, and to be decremented during the other of the intervals A and C; and a second up/down counter configured to be incremented during one of the intervals B and D, and to be decremented during the other of the intervals B and D.

According to one embodiment, the time window code comparator comprises an AND logic gate with a first input configured to receive the sequence of timing window position codes and a second input configured to receive the first reference time window position.

According to one embodiment, the timing sequence generator comprises: a shift register comprising at least two flip-flops arranged in series, each flip-flop generating a corresponding one of the at least two time window control signals, the time window control signals being configured to activate the detection, by the pixel, of the return light during the detection time window, the at least two flip-flops of the shift register being clocked by a gated clock signal activated by a pixel activation signal; a logic gate having a first input coupled to an output of the time window code comparator and a second input configured to receive the pixel activation signal, the output of the logic gate being the gated clock signal.

According to one embodiment, the timing sequence generator further comprises a latch having a first input configured to receive a reset signal generated based on an output of the shift register, and a second input coupled to tan output of the time window code comparator and an output coupled to the first input of the logic gate.

According to a further aspect, there is provided an optoelectronic device comprising: a light source configured to emit light pulses periodically; an array of pixels configured to detect an amount of return light, wherein each pixel of the array is configured to detect an amount of return light falling in each of a subset of two or more time intervals among a set of time intervals distributed across the time period of the pulses, the subset of two or more time intervals forming a detection time window of the pixel; each pixel comprising: a timing sequence generator comprising a shift register with at least two flip-flops arranged in series, each flip-flop generating a corresponding time window control signal, wherein: the time window control signals are configured to activate the detection, by the pixel, of the return amount of emitted light during a detection time window selected by the time window control signals; the flip-flops of the shift register are clocked by a gated clock signal activated by a pixel activation signal; and a last flip-flop of the shift register is configured to provide a reset signal for disabling the gated clock.

According to one embodiment, the shift register comprises four flip-flops arranged in series, each of the four flip-flops generating a corresponding time window control signal at its respective output.

According to one embodiment, a clock frequency of the pixel activation signal is modified at alternate cycles.

According to one embodiment, the clock frequency of the pixel activation signal is multiplied by two at each of the alternate cycles.

According to a further aspect, there is provided an optoelectronic device comprising: a light source configured to emit light; an array of pixels configured to detect an amount of return light; wherein each pixel of the array is configured to detect, during each detection cycle among a plurality of detection cycles, an amount of return light falling in each of a subset of two or more time intervals among a set of time intervals distributed across the time period of the pulses, the subset of two or more time intervals forming a detection time window of the pixel selected by at least one time window control signal; and a circuit comprising a time to digital converter configured to be gated by rising edges and by falling edges of the at least one time window control signal on alternate detection cycles.

According to one embodiment, each pixel comprises a plurality of photosensor and an OR tree circuit coupling the photosensors to the time to digital converter of the pixel.

According to one embodiment, the time window position codes of the sequence are: gray coded; or binary coded; or unary coded; or provided by phase-shifted clock signals.

According to one embodiment, each of the at least one time window control signal comprises a positive pulse shape at one of the alternate cycles and a negative pulse shape at the other of the alternate cycles.

Brief description of drawings

The foregoing features and advantages, as well as others, will be described in detail in the following description of specific embodiments given by way of illustration and not limitation with reference to the accompanying drawings, in which:

Figure 1 schematically illustrates an ToF optoelectronic device according to an example embodiment of the present disclosure;

Figure 2 is an enlarged view of a light emitter of the optoelectronic device of Figure 1 according to an example embodiment of the present disclosure;

Figure 3 is an enlarged view of a light sensor of the optoelectronic device of Figure 1 according to an example embodiment of the present disclosure;

Figure 4 illustrates an example of a histogram of data generated for a pixel of a ToF optoelectronic device;

Figure 5 schematically illustrates a ToF transmission and reception chain according to an example embodiment of the present disclosure;

Figure 6 schematically illustrates a ToF pixel of Figure 5 in more detail according to an example embodiment of the present disclosure;

Figures 7A to 7C are timing diagrams representing operation of the ToF pixel of Figure 6 according to an example embodiment of the present disclosure;

Figure 8A schematically illustrates a time window generator of Figures 5 and 6 according to an example embodiment of the present disclosure;

Figure 8B schematically illustrates a time window generator of Figures 5 and 6 according to a further example embodiment of the present disclosure;

Figure 9 is a timing diagram representing operation of the time window generator of Figure 8B;

Figure 10 is a timing diagram illustrating operation of the circuits of Figures 8A and 8B;

Figure 11 schematically illustrates a circuit for generating a clock signal of Figure 10; and

Figure 12 schematically illustrates part of the ToF optoelectronic device of Figure 1 in more detail according to an example embodiment of the present disclosure.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

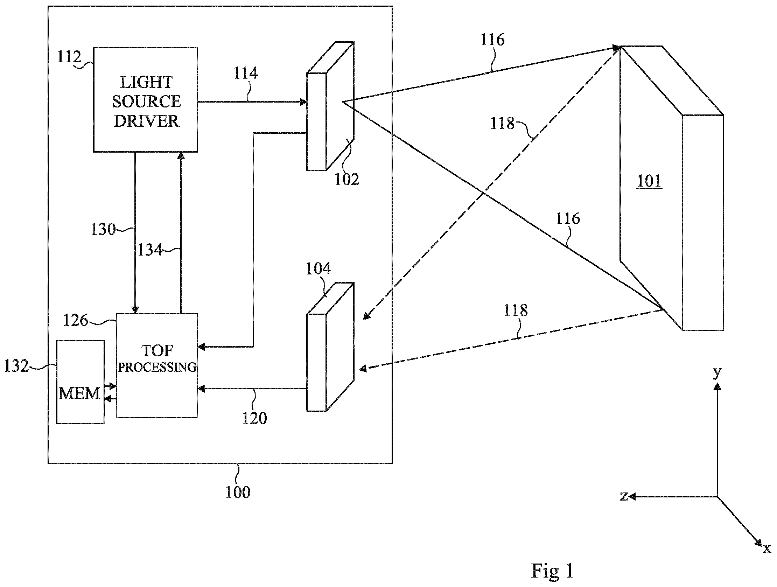

Figure 1 illustrates an optoelectronic device 100 that utilizes ToF measurements to capture depth information about a target object according to an example.

An object 101 is disposed in a 3D environment positioned in front of an optoelectronic device 100. The object 101 is provided for explanatory purposes. It should not be considered to impose limitations on the size, shape or distance of objects detectable by an optoelectronic device 100. The 3D environment may include additional objects of various shapes or sizes disposed at varying distances from the optoelectronic device 100 and the optoelectronic device may determine the proximity of the various objects in the 3D environment for imaging the 3D environment. The object 101 may comprise multiple surfaces at various distances from the optoelectronic device 100, and the optoelectronic device 100 may determine the depth of the different surfaces of the object 101. The optoelectronic device 100 may simultaneously determine the proximity of additional objects in the 3D environment to generate a 3D image of the 3D environment. A 3D image may comprise a depth map of the 3D environment.

The optoelectronic device 100 for example comprises a light source 102, which will also be referred to as an optical transmitter, and a light sensor 104.

The optoelectronic device 100 comprises, for example, a light source driver (LIGHT SOURCE DRIVER) 112. The operation of the light emitter 102 may be controlled by the light source driver 112, which is configured to generate a drive current 114 that is capable of activating the light emitter 102, thereby causing the light emitter 102 to emit photons. The light source driver 112 may also control the duration, timing, and intensity of optical pulses emitted by the light emitter 102.

Radiation (light) 116 emanating from the light source 102 is, for example, incident upon the object 101. The incident radiation 116 is reflected off the object 101 to produce reflected radiation 118. It is noted that although incident radiation 116 and reflected radiation 118 are represented in Figure 1 by few arrows, all radiation incident on and reflected from the object 101 may be combined in one beam or cone of radiation. While some part of the incident radiation 116 may be scattered depending upon the surface features of the object 101, a significant part of the incident radiation 116 is for example reflected, thereby producing the reflected radiation 118. In the present description, reflected light or scattered light or the like are combined in a same term "return light", which covers all types of returning light from the object and resulting from an illumination of the object by the light emitter 102.

The light sensor 104 receives the reflected radiation 118 and generates an output signal 120 in response to the reflected radiation 118 striking the light sensor 104. The output signal 120 may be a digital signal or an analog signal, depending on the circuitry of the light sensor 104.

The optoelectronic device 100 further comprises a ToF processing circuit (ToF PROCESSING) 126 configured to receive the output signal 120 and determine the proximity of the object 101 to the optoelectronic device 100 based on the output signal 120. The distances determined by the ToF processing circuit 126 are for example stored in a memory (MEM) 132 of the device 100 in the form of image data, for example one or more depth maps. The memory 132 is for example coupled to the ToF processing circuit 126. The memory 126 is for example a volatile memory such as a RAM (random access memory), or a non-volatile memory, such as a Flash memory. The processing circuit 126 is for example additionally configured to reconstruct 3D images of the 3D environments including the object 101 based on the output signal 120 as well as 2D intensity images related to reflective properties of surfaces in the scene.

The optical source driver 112 for example receives a control signal 134 from the processing circuit 126 that initiates the optical source driver 112.

Arrival times of the pulses of reflected radiation 118 at the optical receiver 104 are proportional to twice the distance between the object 101 and the optoelectronic device 100, based on the speed of light in the measurement medium or environment.

Return light 118 for example arrives at different times at the optical receiver 104, depending on the respective distances between the different parts of the object 101 or other objects in the 3D environment and the optoelectronic device 100. The reflected radiation 118 is for example detected synchronously with a timing signal 130 that is configured to cause the optical source driver 112 to generate incident radiation 116. The processing circuit 126 is for example configured to analyze the time-of-flight between emission of incident radiation 116 travelling towards the object 101 and arrival of reflected radiation 118 received at the optical receiver 104 to determine the proximity of the object 101 and/or of other objects in the 3D environment. A plurality of proximity measurements may be used to generate a comprehensive set of data to accurately determine both lateral spatial distances (e.g. in the x-y plane shown in Figure 1) and depth (e.g. along the z-axis shown in Figure 1) of the object or objects in the 3D environment.

In direct ToF (DToF) applications, photons counted at a radiation-sensitive pixel may be categorized based on ToF analysis to generate a histogram of estimated distances of the object or surface that reflected the radiation to the radiation-sensitive pixel. Conceptually, the ToF of a photon sensed at a radiation-sensitive pixel may be calculated and assigned to a bin that represents a distance range. As additional photons are sensed during a measurement, they may be assigned to a bin. The various bins may accumulate a photon count over a plurality of pulse periods, for example hundreds or thousands of pulse periods, and the distribution of photons in the various bins may be used to estimate the distance from the optoelectronic device 100 of the reflective surface measured at the radiation-sensitive pixel.

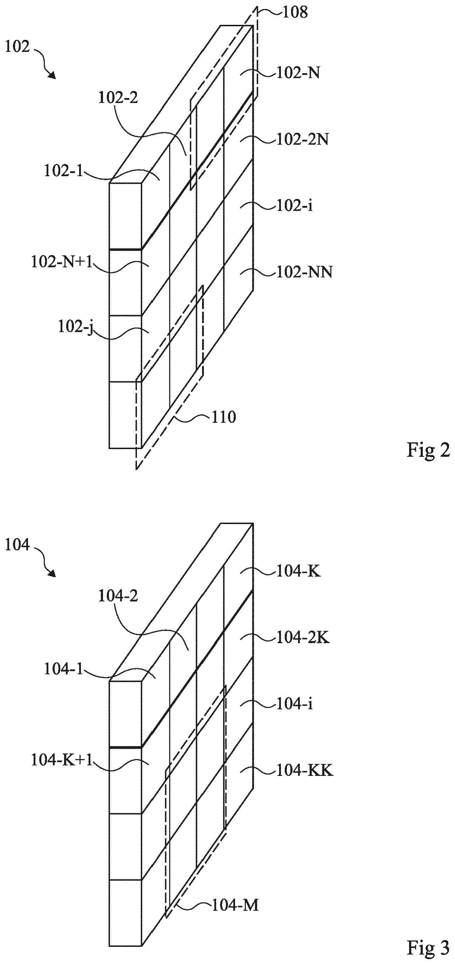

Figure 2 shows an enlarged view of the light emitter 102 of the optoelectronic device 100 of Figure 1 according to an example embodiment.

The light source 102 may comprise a plurality of light emitters 102-1 to 102-NN arranged as an array of N rows and N columns. Although the example of Figure 2 illustrates the light emitters 102-1 to 102-NN as being arranged in a square N x N array, other array shapes would be possible, such as rectangular arrays in which the number of rows and columns is not equal, and non-rectangular array shapes, such as ellipsoidal arrays or circular-shaped arrays. Each of the light emitters 102-1 to 102-NN may comprise one or more infrared sources, modulated light emitting diodes (LEDs), or semiconductor lasers, or combinations thereof, although other types of light sources may be possible.

In various embodiments, where the light emitters 102-1 to 102-NN comprise semiconductor lasers, a light emitter 102-i of the array of light emitters 102-1 to 102-NN for example comprises one or more vertical-cavity surface-emitting lasers (VCSELs), quantum well lasers, quantum cascade lasers, interband cascade lasers, or vertical external-cavity surface-emitting lasers (VECSELs), or the like.

The light emitters 102-1 to 102-NN are for example all configured to operate at a same wavelength. In other embodiments, however, the light emitters 102-1 to 102-NN may operate at different wavelengths. For example, the group 108 of light emitters and the group 110 of light emitters 102-1 to 102-NN may operate at different wavelengths from each other. The light emitters 102-1 to 102-NN may exhibit continuous wave (CW) operation, quasi-continuous wave (QCW) operation, or pulsed operation.

In various embodiments, the array of light emitters 102-1 to 102-NN may be an addressable array. An effect of operating the array of light emitters 102-1 to 102-NN in an addressable mode is the ability to dynamically reconfigure an illumination pattern of the light source 102, an intensity level, or a duration of pulses emitted by each of the light emitters 102-1 to 102-NN of the array of light emitters 102-1 to 102-NN to adapt to various applications, environments, or cycles of an operation.

Figure 3 shows an enlarged view of the light sensor 104 of the optoelectronic device 100 of Figure 1 according to an example.

In the example of Figure 3, the light sensor 104 comprises a plurality of radiation-sensitive pixels 104-1 to 104-KK arranged in K rows and K columns and configured to detect an amount of return emitted light. Although the example of Figure 3 illustrates the radiation-sensitive pixels 104-1 to 104-KK as being arranged in a square K x K array, other array shapes would be possible, such as rectangular arrays in which the number of rows and columns is not equal, and non-rectangular array shapes, such as ellipsoidal arrays or circular-shaped arrays. The intrinsic spatial resolution of the optical system 100 is for example be determined by the resolution of the light sensor 104. It is noted that the output signal 120 may be expressed as a $K \times K$ matrix of measurements, or a $1 \times K^2$ vector of measurements, with each entry of the matrix corresponding to the signal received from a respective pixel of the plurality of radiation-sensitive pixels 104-1 to 104-KK.

The radiation-sensitive pixels 104-1 to 104-KK are, for example, selected in groups of pixels, called macro-pixels 104-M. The output signal of the pixels of a same macro-pixel may be combined, for example, by a OR tree.

In an example, the pixels forming a given macro-pixel may be changed, for example for data analyzing purposes.

Each of the radiation-sensitive pixels 104-1 to 104-KK comprises, for example, one or more single-photon avalanche diodes (SPADs), photo diodes (PDs), avalanche photo diodes (APDs), or combinations thereof.

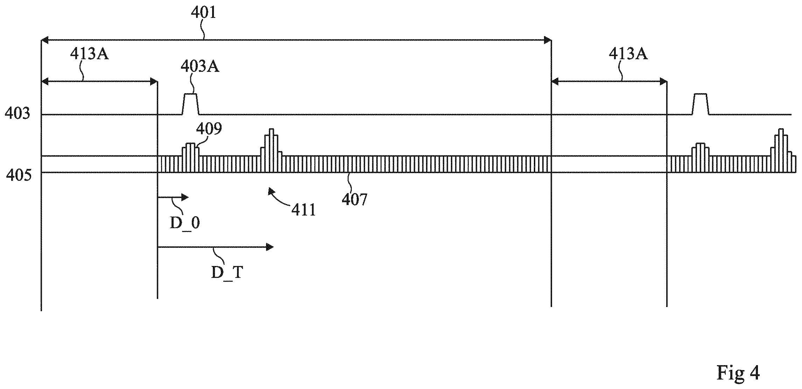

Figure 4 depicts a histogram of data generated for a pixel of a ToF optoelectronic device according to an example.

The vertical axis in Figure 4 represents the magnitude of a photon count and the horizontal axis represents time, for example in nanoseconds, relative to emission of a periodic light pulse. An activation signal 403 associated with the light emitter 102 indicates when at least part of the light emitter is on and emitting photons. The activation signal 403 depicts a light pulse 403A during a pulse period 401. As the amplitude of the optical pulse 403A increases, the signal to noise ratio of photons detected by a radiation also increases. Likewise, increasing the duty cycle of the optical pulse 403A also increases the signal to noise ratio at the signal. However, safety and efficiency considerations may constrain the advantages offered by increasing the amplitude, duty cycle, or both of the optical pulse 403A.

In the example of Figure 4, the light-emission period 401 is divided into a number of bins 407. The number of bins may vary from system to system. Each bin corresponds to a time interval of the light emission period and to a distance range for an object in a 3D environment due to the relationship between the time-of-flight of detected photons and the distance of the object. For example, an optical emission period that is 64 nanoseconds long may be divided into 64 bins, each bin representing a one nanosecond time interval. Photons detected during a light-emission period 401 are counted and allocated to the appropriate bin. For example, photons detected during a first time interval are allocated to a first bin, photons detected during a second time interval are allocated to a second bin, etc. Photon counts from multiple light-emission periods 401 may be aggregated to generate a histogram 405. In some cases, photon counts from thousands or hundreds of thousands, of light emission periods may be aggregated to produce the histogram 405.

Photons emitted by the light emitter 102 during a light pulse are for example reflected off a target object in a 3D environment. A photon count may reveal a return light pulse 411 of photons arriving at one or several of the radiation-sensitive pixels 104i of Figure 3. The time between the light pulse 403A and the sensed return pulse 411 is for example used to determine the distance between the target object and the ToF system. Cross talk from the optical pulse 403A for example produces a cross-talk pulse 409. The light-emission period 401 for example comprises a blanking time 413A to reduce the effect of cross-talk on the histogram.

To determine the distance D_T of an object or target, the histogram results are for example processed to detect the peak time interval to discriminate return photons from a target object from noise or photons reflected off other objects in a 3D environment. Typically, the dominating peak will be issued from an object of interest, while secondary peaks are for example initially ignored or rejected.

This processing is for example applied to each pixel of the light sensor 104, which presents challenges for scaling solutions. Indeed, as greater and greater resolution is desired, this imposes a greater and greater burden on the processing and memory capabilities of a ToF device.

In various embodiments described in more detail below, these processing demands are for example sidestepped by a recursive approach that detects the peak time interval before processing and avoids saving count information for each bin of each pixel. In various embodiments, progressively refined search windows (detection windows) are for example iteratively determined to identify the location of the peak time interval before processing. As the search windows become progressively smaller, the duration of the light pulses for emitting photons may also decrease. The final time window is for example transmitted to the processor as the peak time interval. This for example eliminates the need for transmission of a full histogram of data for processing.

For example, during a first step, photons emitted by a light pulse, or by periodic light pulses, and detected during a first time period are counted and grouped according to their times of flight relative to emission. The first time period for example comprises a series of light pulses whose photons are counted and grouped. A first set of photons having times of flight within a first detection time window, having a first time range, are for example counted and grouped according to time intervals. Each time interval is associated with a start time and end time, and any photon having a time of flight falling within a given time interval is for example counted for that time interval. In some embodiments, some of the time intervals may be overlapping. For example, photons having times of flight within a first of the time intervals may be counted for the first time interval. Photons having times of flight within a second of the time intervals may be counted for the second time interval and so on. In various embodiments, at least some of the time intervals are overlapping with one or more other time intervals.

The results of the photon count from the first detection window are for example used to refine the range for counting photons in a subsequent time period or periods. For example, the counts for the time intervals of the first time window are used to identify a time interval where the peak is located and they are for example used to determine a second detection window that is smaller than the first detection window. As will be appreciated, the peak is for example determined to be located in, or near, a region of the first time window where the photon count is greatest.

Once such a region is identified, it is for example then used to narrow the search, for the peak time interval during a second time period, to a detection window corresponding to a second time range that is smaller than the first time range. The second time range is for example used during a second time period, during which a second light pulse, or series of periodic light pulses, is/are emitted, and photons having times of flight falling within the second time range are for example counted and grouped. In some embodiments, the light pulse, or each light pulse of the series of optical pulses, of the second time period has a duration that is less than that of the light pulse, or each light pulse of the series of light pulses, of the first time period. The reduction in the duration of the optical pulse or pulses of the second time period relative to the first time period for example corresponds to the decrease in size of the second detection window relative to the first detection window. The results of the second time period, in particular the second count, is for example used to define a third detection window, smaller than the second detection window, for counting photons during a third time period. The light pulse, or each light pulse of the series of light pulses, of the third time period for example have a duration that is less than that of the light pulse or pulses of the second detection window, and this decrease in the duration for example corresponds to the decrease in the duration of the light pulse or pulses of the third time period. This process is for example repeated to identify progressively smaller detection windows until it is small enough to be satisfactory to be used as a peak-time interval. In various embodiments, data from a count from a final time period may be transmitted to a processor and used to identify a location of peak photon position within the peak time interval.

In the embodiments of subsequent figures, each radiation-sensitive pixel or group of pixels of a light sensor 104 is paired with hardware for selecting a peak time interval for that pixel. The recursive approach is accomplished with hardware to reduce processing required for ToF imaging.

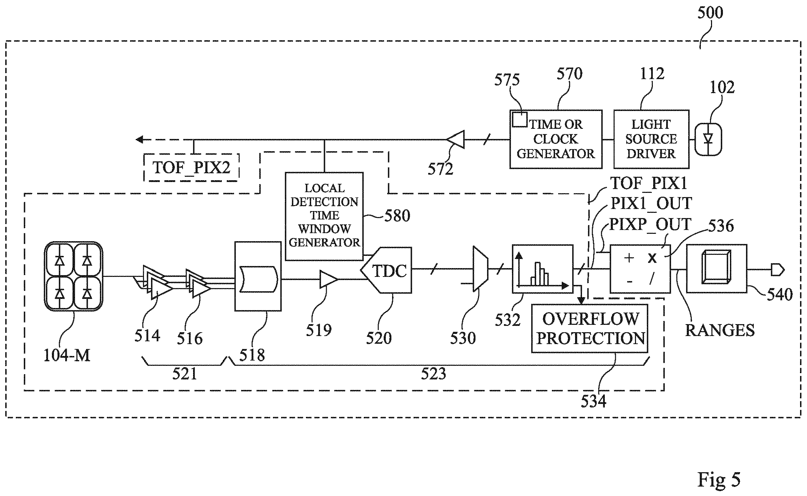

Figure 5 schematically illustrates a ToF transmission and reception chain 500 of the optoelectronic device 100 of Figure 100 according to an example embodiment of the present disclosure.

The transmission portion of the chain for example comprises the light source driver (LIGHT SOURCE DRIVER) 112 and light emitter 102. The light source driver 112 for example receives a control signal generated by a time or clock generator (TIME OR CLOCK GENERTOR) 570, which for example forms part of the ToF processing circuit 126 of Figure 1. The time or clock generator 570 for example comprises a time window position code generator 575 configured to generate a sequence of time window position codes. The time window position codes are for example gray-coded, such that their transmission across the array consumes a relatively low amount of energy, and such that there is a low risk of glitches caused by the code transmissions. In alternative embodiments, it would also be possible for the time codes to be provided as binary codes, unary codes and/or phase-shifted clocks.

The reception portion of the chain for example comprises one or more ToF pixels ToF_PIX1, ToF_PIX2, etc., only the pixel ToF_PIX1 being illustrated in detail in Figure 5, but it will be understood that each pixel is for example implemented by a similar circuit. Each ToF pixel for example receives timing and clock signals from the generator 570, for example via a buffer 572.

Each ToF pixel for example comprises one or more corresponding pixels of the light sensor 104. For example, the ToF pixel ToF_PIX1 comprises the macro-pixel 104-M of Figure 3. Each of the ToF pixels is for example coupled to a corresponding macro-pixel, which is associated, for example in a programmable fashion, to one or more photodetectors of the light sensor 104. In the example of Figure 5, the macro-pixel 104-M comprises four SPADs.

The pixel or pixels 104-M of the ToF pixel ToF_PIX1 are for example coupled to an input of one or more quenching and recharge circuits 514. Outputs of the quenching and recharge circuits 514 are each, for example, coupled to one or several optional buffering circuits 516, which are configured, for example, to perform a pulse width shortening.

The quenching and recharge circuits 514 and buffering circuits 516 for example form a front-end circuit 521 of the ToF pixel. An output of the frond-end circuit 521 is for example coupled to a readout circuit 523 of the ToF pixel, the readout circuit 523 comprising, for example, an OR Tree circuit 518, a time to digital converter (TDC) 520, a detection time window generator (LOCAL DETECTION TIME WINDOW GENERATOR) 580, a multiplexer 530 and a histogram generator and integrator 532.

The outputs of the buffering circuits 516 are for example coupled to the OR Tree circuit 518, which is configured to implement pulse combining logic. An output of the OR Tree circuit 518 is for example coupled to an optional additional buffering circuit 519.

The output of the buffering circuit 518 is coupled to an input of the TDC 520. Another input of the TDC 520 is coupled, or preferably connected, to the output of the detection time window generator 580. The TDC 520 is for example configured to count a number of photon detection events detected by the pixels 104-M of the light sensor 104 that occur during a plurality of time intervals defined by the detection time window generator 580.

The output of the TDC 520 is coupled, or preferably connected, to one input of the multiplexer 530. A second input of the multiplexer is for example coupled to built-in self-test (BIST) logic and the multiplexer thus permits high-speed BIST functions. While not illustrated in Figure 5, in some embodiments, a further multiplexer is provided that permits a test pulse to be inserted in the OR tree circuit 518 for the purpose of testing.

An output of the multiplexer 530 is for example coupled, preferably connected, to the histogram generator and integrator 532. The histogram generator and integrator 532 for example comprises a memory storing a histogram of relatively reduced size, for example storing photon counts for just two, three or four time intervals of the selected detection window. For example, this involves incrementing up and down counters. According to some embodiments, if one of the counters exceeds a given threshold, an overflow protection circuit 534 (OVERFLOW PROTECTION) is configured to generate a control signal, which for example causes the number of photodetectors of the macro-pixel 104-M to be reduced in order to reduce the signal.

The ToF transmission and reception chain 500 further comprises, in some embodiments, a digital signal processing unit 536, and a depth image or point cloud generation circuit 540.

The digital signal processing (DSP) unit 536 is for example configured to receive output data PIX1_OUT to PIXP_OUT from the ToF pixels TOF_PIX1 to TOF_PIXP respectively, where P is the number of ToF pixels in the ToF optoelectronic device. The DSP unit 536 is for example configured to perform range extraction based on the integrated histogram values, and to generate output ranges RANGES indicating one or more ranges of objects detected by the macro-pixel.

The circuit 540 is for example configured to receive the ranges from the DSP unit 536, and to generate a depth image and/or point cloud based on the range signals.

The elements 104-M, 514, 516, 518, 519 and 530 of the ToF pixel ToF_PIX1 for example operate in an event-driven manner, while the elements 532, 536 and 540 are for example clock driven.

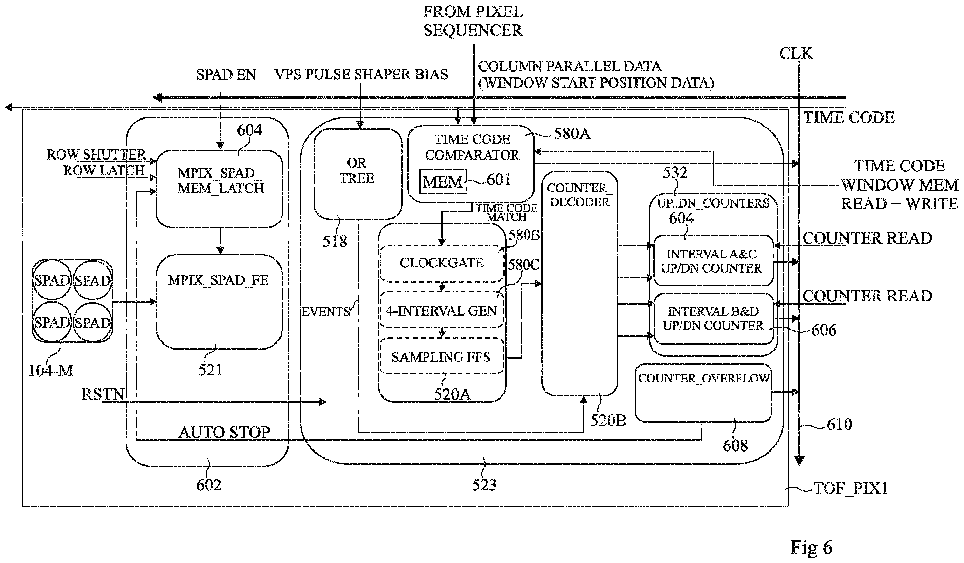

Figure 6 schematically illustrates the ToF pixel ToF_PIX1 of Figure 5 in more detail according to an example embodiment of the present disclosure. Each of the pixels of the ToF optoelectronic device for example comprises a similar circuit.

According to the example of Figure 6, the macro-pixel 104-M is for example formed of four SPADs. Outputs of the macro-pixel 104-M are for example coupled, or preferably connected, to the front-end circuit 521 (MPIX_SPAD_FE). The front-end circuit 521 for example forms part of a SPAD interface circuit 602, which additionally comprises a per pixel or per macro-pixel memory (MPIX_SPAD_MEM_LATCH) 604, which is coupled, or preferably connected, to front-end circuit 521. The memory 604 is for example configured to receive, at one or more inputs, a pixel enabling signal (SPAD EN), a row shutter signal (ROW SHUTTER) and a row latch signal (ROW LATCH), which control the activation and deactivation of the SPADS, via the memory 604, based on an operating mode of the ToF optoelectronic device.

An output of the front end circuit 602 is for example coupled, or preferably connected, to the readout circuit 523, and in particular to the OR tree circuit 518 (OR TREE), optionally via the buffering circuits 516 (not illustrated in Figure 6). In the example where the macro-pixels have four photodetectors or SPADs, the OR tree circuit 518 is for example a four to one tree pulse combining logic circuit. The OR tree circuit 518 for example receives a biasing signal VPS PULSE SHAPER BIAS, in order to control a pulse shape of the event signals generated by the SPADs. For example, the OR tree circuit 518 comprises a pulse shaper formed of a current starved inverter and a logic gate, the current starved inverter comprising at least one transistor biased by the signal VPS PULSE SHAPER BIAS. The current starving inverter is for example used to reduce the pulse duration such that it is shorter than the SPAD deadtime, thereby reducing the TDC deadtime.

An output signal EVENTS of the OR tree circuit 518 is for example coupled, or preferably connected, to the TDC 520, which is for example implemented by one or more sampling flip-flops (SAMLING FFS) 520A, and by a decoder 520B (COUNTER_DECODER). The outputs of the OR tree circuit 518 and TDC 520 are for example coupled, preferable connected, to the histogram generator and integrator 532, which in example of Figure 6 comprises up/down counters (UP_DN_COUNTERS).

The local time window generator 580 for example comprises a comparator (TIME CODE COMPARATOR) 580A, a clock gate (CLOCKGATE) 580B and a four-interval timing generator (4-INTERVAL GEN) 580C. In alternative embodiments, rather than being a four-interval timing generator, the generator 580C is an I interval timing generator, where I is for example equal to 1 or more.

The comparator 580A is for example configured to receive the sequence of time codes (TIME CODE), which are for example gray-coded time window position codes. In alternative embodiments, it would also be possible for the time codes to be provided as binary codes, unary codes and/or multiphase clocks, in other words a plurality of phase-shifted clock signals. The comparator 580A also for example receives a signal COLUMN PARALLEL DATA (WINDOW START POSITION DATA), indicating the detection window start position. The comparator 580A is for example configured to compare a locally stored reference time window position with the time window position codes TIME CODE, and to output a signal TIME CODE MATCH when the codes correspond. For example, the reference time window position is stored by a memory (MEM) 601 of the comparator 580A. The memory 601 is for example a volatile memory such as a RAM (random access memory).

The local timing window generator 580 is for example also configured to receive as an input, a memory control signal TIME CODE WINDOW MEM READ and WRITE, which controls the updating of the reference time window position, provided by the signal COLUMN PARALLEL DATA, and stored by the memory 601 of the comparator 580A.

The signal TIME CODE MATCH is for example provided to the clock gate circuit 580B, which in turn provides an activation signal to the timing generator 580C. The generator 580 generates, for example, several time window control signals for controlling the sampling flip-flops 520A of the TDC 520.

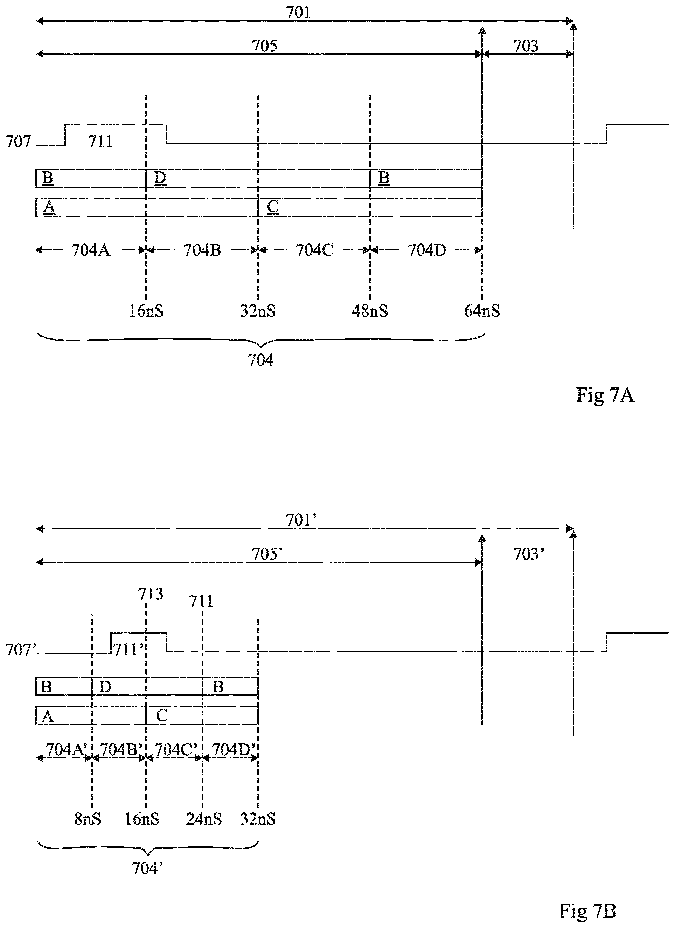

In the example of Figure 6, an output of the sampling flip-flops 520A comprises sampled timing codewords used for the pixel event sorting by the decoder 520B. The decoder 520B is for example configured to generate output control signals for controlling the up/down counters 532. For example, the up/down counters 532B comprise a time interval A and C up/down counter (INTERVAL A & C UP/DN COUNTER) 604 and a time interval B and D up/down counter (INTERVAL B & D UP/DN COUNTER) 606. Examples of the times intervals A, B, C and D will be described below with reference to Figures 7A to 7C

The histogram generator and integrator 532 comprises event-driven logic to activate, for example, one of the two counters 604, 606 in direction up or down, for example depending on the arrival time of the event detected by the associated pixel during the selected detection window. According to one example, when a photon event occurs during the time intervals A or B, the counters 604 and 606 are each incremented, and when a photon event occurs during the time interval C or D, the counters 604 and 606 are each decremented.

According to the example of Figure 6, the counters 604, 606 are for example read out by a control signal COUNTER READ, and the outputs of the counters are for example provided on a bus 610.

According to an example, counters 604, 606 are coupled, or preferably connected, to an overflow detector (COUNTER_OVERFLOW) 608, which is configured, when one of the counters 604, 606 reaches a certain threshold, to generate the overflow protection signal AUTOSTOP. The AUTOSTOP signal is for example supplied to the memory 604 in order to disable one or more of the SPADs of the macro-pixel 104-M.

According to the example of Figure 6, the bus 610 is also coupled to the comparator 580A such that the comparator receives the time window memory readout signals.

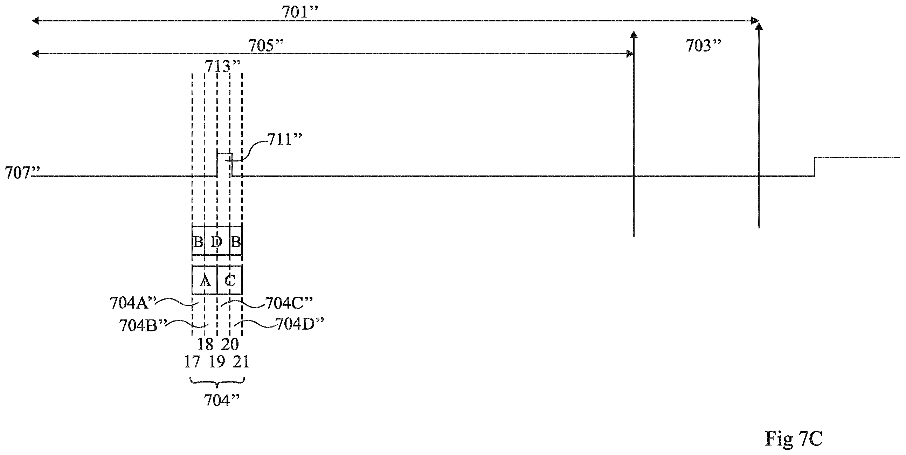

Operation of the up/down counters 532 and an iterative modification of the detection window by the digital signal processing unit 536 each ToF pixel will now be described in more detail with reference to Figures 7A, 7B and 7C.

Figures 7A, 7B and 7C are timing diagrams representing detection windows according to an example embodiment of the present disclosure.

Various approaches may be utilized for grouping and counting photons to identify the time ranges where the peak is most likely to be found. In various embodiments, this may comprise dividing detection time windows into a plurality of time intervals and counting photons detected during these time intervals. Comparisons between the counts obtained for each time interval can then be used to determine where the photon count is highest relative to each other and determine subsequent detection windows, and generate an estimate for the peak time interval.

According to the example of Figures 7A to 7C, the detection time window comprises four time intervals A, B, C and D, wherein the time intervals A and C are non-overlapping with each other, the time intervals B and D are non-overlapping with each other, the time interval A is overlapping with the time intervals B and D, and the time interval C is overlapping with the time intervals B and D.

Figure 7A graphically illustrates a first iteration or step in a method of identifying a peak position.

The vertical axis in Figures 7A to 7C represents amplitude and the horizontal axis represents time in nanoseconds. A light pulse (not represented) is for example emitted at the start of a light pulse period 701. The light pulse period 701 for example comprises a blanking period 703 and a ranging period 705. A photon-count curve 707 represents the magnitude of the photon count as a function of time. The photon count curves in Figures 7A to 7C are represented as a smooth pulse for ease of representation. In the example of Figure 7A, the ranging period 705 is of 64 ns, and the light pulse period is of 80 ns, although in other embodiments, different values would be possible.

Photon counting is for example performed for a plurality of time intervals of a detection window 704. In the first iteration, as represented in Figure 7A, the detection window for example has a duration equal to the duration of the ranging period 705. In the case that the detection window is 64 ns in duration, the time interval A for example corresponds to the first 32 ns of the detection window, the time interval B corresponds to the first 16 ns and last 16 ns of the detection window, the time interval C corresponds to the last 32 ns of the detection window, and the time interval D corresponds to the middle 32 ns period of the detection window, in other words to the time interval from 16 ns to 48 ns. There could of course be more or less than four time intervals in the detection window 704, and the time intervals may be continuous or discontinuous. A photon detected during overlapping time intervals is for example counted for both time intervals.

In order to find the region where a peak is most likely to be found, the number of photons counted in the time interval A is for example compared with the number of photons counted in the time interval C, and the number of photons counted in the time interval B is for example compared with the number of photons counted in the time interval D. This is for example achieved using the up/down counters 604 and 606 of Figure 6, in which the counter 604 is for example incremented during the interval A, and decremented during the interval C, and the counter 606 is for example incremented during the interval B and decremented during the interval D. Of course, in alterative embodiments, it would be possible to decrement the counters 604, 606 during the periods A and B respectively, and to increment the counters 604, 606 during the periods C and D respectively.

If the number of photons counted in the time interval A is greater than the number of photons counted in the time interval C, and the number of photons counted in the time interval B is greater than the number of photons counted in the time interval D, it is for example determined that the peak is most likely to be found in the first quadrant 704A of the detection window 704.

If the number of photons counted in the time interval A is greater than the number of photons counted in the time interval C, and the number of photons counted in the time interval B is less than the number of photons counted in the time interval D, it is for example determined that the peak is most likely to be found in a second quadrant 704B of the time window.

If the number of photons counted in the time interval A is less than the number of photons counted in the time interval C, and the number of photons counted in the time interval B is greater than the number of photons counted in the time interval D, it is for example determined that the peak is most likely to be found in a fourth quadrant 704D of the detection window 704.

If the number of photons counted in the time interval A is less than the number of photons counted in the time interval C, and the number of photons counted in the time interval B is less than the number of photons counted in the time interval D, it is for example determined that the peak is most likely to be found in a third quadrant 704C of the first time range 704.

A new detection window is for example determined, by the digital signal processing unit 536 of each pixel, based on the photon counts during the detection window 704. For example, the new detection window is centered around the midpoint of the portion of the time range where the peak is most likely to be found. The window position code corresponding to the first time interval of the new detection window is for example stored, by digital signal processing unit 536, to the memory 601 as the new reference window position.

Fig. 7B graphically illustrates a second iteration or step of the method of determining a peak position, and illustrates in particular the new detection window 704' generated based on the photon counts during the first detection window 704.

The new detection window 704' has a shorter duration than the detection window 704, so as to refine the search window in which the peak position is searched for. The photon-count curve 707' represents the magnitude of the photon count during the detection window 704' as a function of time. The duration of the light pulse 711' during the detection window 704' is for example also decreased relative to the duration of the optical pulse 711 of the preceding iteration. In the example of Figure 7B, the duration of pulse 711' is of 8 ns. For example, if the most photons were determined to be in the first quadrant 704A, the new detection window 704' would normally be centered around the middle of the first quadrant 704A, but this would cause a portion of new detection window 704' to cover negative times of flight. In various embodiments, it may be desirable to prevent time ranges from extending into negative ranges, and therefore, as illustrated in Figure 7B, an 8 ns offset is applied in order to shift the center 713 of the new detection window 704' to the 16th ns. The size of the offset is for example chosen such that the detection window does not begin earlier than the start time of the pulse period.

Photon counting is for example performed for the new detection window 704' of Figure 7B in a similar manner to the photon counting for the detection window 704, and a similar process is used to deduce yet a new detection window based on the photon counts. The window position code corresponding to the first time interval of the new detection window is for example stored, by digital signal processing unit 536, to the memory 601 as the new reference window position. This process is for example repeated as many times as desirable and the last detection window is for example used as an estimate for the peak time interval. An example of the final iteration or step is represented in Figure 7C, in which the detection window 704" has been reduced to spanning only 4 ns, running from the 17th to 21st ns of the ranging period 705" in that example.

An operation of identifying a specific location of the photon peak within the peak time interval of the detection window 704" is for example performed. This may comprise a fractional value, which may be negative, that is summed with a center position of the peak time interval to provide a location of the photon peak within the peak time interval. This may be accomplished by processing data collected during a final iteration.

The location of the peak position within the peak-time interval is for example determined by calculating a shift value and subtracting the shift value, which may be negative, from the center of the peak-time interval. For example, the shift value is calculated using trigonometric functions using Equation 1 as follows:

$$Shift\ Value = ArcTan(\frac{A-C}{B-D})$$

*Equation 1*

In Equation 1, A, B, C and D respectively represent the photon counts of the time interval A, B, C and D, and the difference A-C is for example provided by the up/down counter 604 of Figure 6, while the difference B-D is for example provided by the up/down counter 606 of Figure 6.

The shift value may also be adjusted according to additional conditions. If B-D is a negative value and A-C is also negative, the shift value is for example reduced by $\pi$. If B-D is a negative value and A-C is greater than or equal to zero, the shift value is for example increased by $\pi$. If B-D is equal to zero and A-C is negative, the shift value is for example equal to $-\pi/2$. If B-D is equal to zero and A-C is greater than or equal to zero, the shift value is for example equal to $\pi/2$. If B-D is greater than zero, the shift value for example remains as calculated in Equation 1 without any adjustment.

After adjustments, the location of the peak photon position within the peak time interval is for example as defined by Equation 2 as follows:

*Location = Peak Bin – Shift Value\*2/ π*

*Equation 2*

In Equation 2, the Peak Bin is for example a numeral assigned to a bin comprising the peak time interval estimate. The Peak Bin may comprise the center of the final detection window 704". In various embodiments, the Peak Bin is always an odd numbered bin. The second term of Equation 2 (Shift Value\*2/ $\pi$) for example converts the shift value from radians into the bin unit.

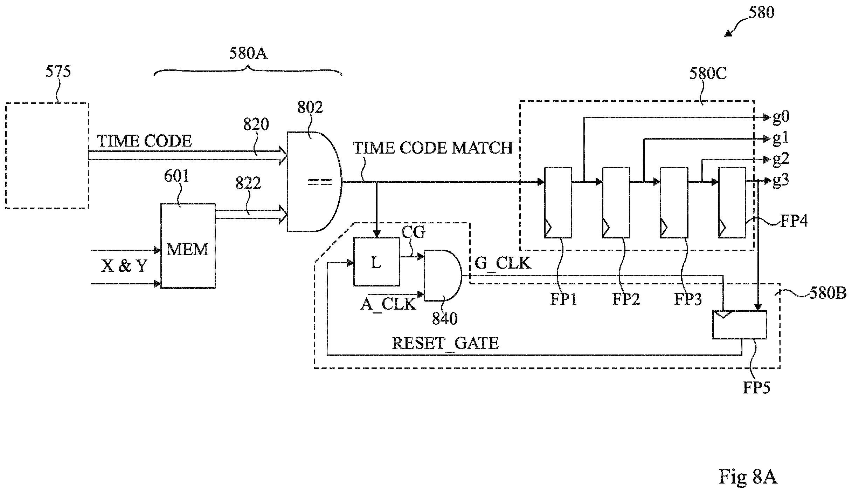

Figure 8A schematically illustrates the time window generator 580 of Figures 5 and 6 according to an example embodiment of the present disclosure.

According to the example of Figure 8A, the time window generator 580 comprises the time window code comparator 580A, comprising the memory 601 and a logic gate 802, such as an AND gate. The logic gate 802 is configured to compare the sequence of time window position codes TIME CODE with the reference time window position stored by the memory 601. For example, the sequence of time window position codes TIME CODE is generated by the generator 575 of Figure 5 and provided to one input of the logic gate 802 on a bus 820. The reference time window position stored by the memory 601 is for example provided to another input of the logic gate 802 on a bus 822.

In some embodiments, as represented in the example of Figure 8A, the memory 601 is shared by all of the ToF pixels of the array, and has inputs receiving a pixel selection signal X&Y, configured to select in the memory 601, for given pixel, the corresponding reference window position code. The signal X&Y is for example provided by a sequencer of the device (not illustrated in Figure 8A).

The logic gate 802 for example asserts an output signal TIME CODE MATCH when all of the bits of a current time window position code of the sequence TIME CODE match the corresponding bits of the reference window position. According to the example of Figure 8A, the output of the logic gate 802 is coupled, or preferably connected, to the four-interval timing generator 580C, which is for example implemented by a shift register. The shift register 580C for example comprises at least two flip-flops. In the example of Figure 8A, the shift register comprises four flip-flops FP1, FP2, FP3 and FP4 arranged in series. Each of the flip-flops FP1 to FP4 is respectively configured to generate a corresponding time interval control signal g0, g1, g2 and g3.

The flip-flops of the four-interval timing generator 580C are for example clocked by a gated clock signal G_CLK, which is generated by the clock gate 580B based on the signals TIME CODE MATCH and g3. For example, the clock gate 580B comprises a flip-flop FP5 receiving at its data input the signal g3, and generating at its output a reset signal RESET_GATE. The flip-flop FP5 is for example clocked by the gate clock signal G_CLK. The clock gate 580B further comprises, for example, a latch L configured to receive the reset signal RESET_GATE, and to clock this signal based on the signal TIME CODE MATCH. An output CG of the latch L is for example gated by an array clock signal A_CLK in order to generate the gated clock signal G_CLK. For example, the output of the latch L is coupled, preferably connected, to one input of an AND gate 840, the other input of which receives the array clock signal A_CLK. The output of the AND gate 840 for example provides the gated clock signal G_CLK. In some embodiments, the array clock signal A_CLK is a high-speed clock, for example having a frequency in the order of hundreds of MHz.

In operation, when the logic gate 802 detects a match, the signal TIME CODE MATCH is asserted, causing the output of the latch L to be asserted, thereby activating the gated clock signal G_CLK. The four-interval timing generator 580C is thus configured to generate a timing edge (for example a rising edge) of each of the signals g0 to g3 in turn on consecutive edges of the clock signal G_CLK. For example, the signal g0 triggers the start of the time interval A and of a first portion of the time interval B; the signal g1 triggers the start of the time interval D and an end of the first portion of the time interval B; the signal g2 triggers the start of the time interval C and the end of the time interval A; and the signal g3 triggers the start of the second portion of the time interval B and the end of the time interval C. The timing edge of the signal g3 also for example causes, on a subsequent significant edge of the signal G_CLK, the signal RESET_GATE to be asserted, which in turn causes the output of the latch L to fall low, and thus stop the clock signal G_CLK.

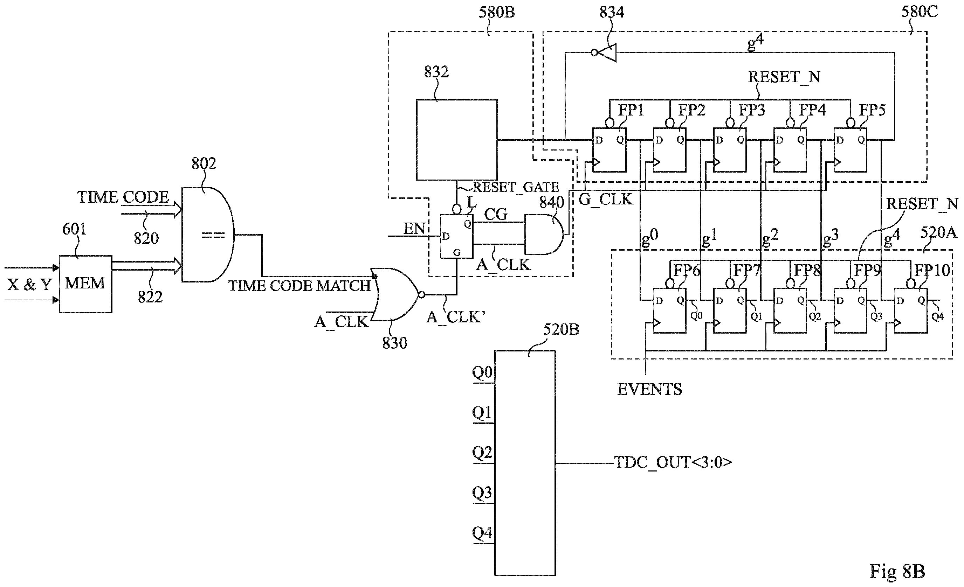

Figure 8B schematically illustrates the time window generator 580 of Figures 5 and 6 according to an alternative example embodiment to that of Figure 8A, as well as an example implementation of the TDC 520. Many of the elements of Figure 8B are the same as elements of Figure 8A, and these elements are labelled with like reference numerals and will not be described again in detail.

In the embodiment of Figure 8B, the output of the logic gate 802 is coupled, preferably connected, to a logic gate 830 configured to generate a timing signal A_CLK' synchronized with the array clock A_CLK for triggering the start of the detection window. For example, the timing signal is synchronized with falling edges of the clock signal A_CLK, and the logic gate 830 is a NOR gate having an inverted input coupled to the output of the logic gate 802 and a non-inverted input coupled to receive the array clock A_CLK.

An output of the logic gate 830 is coupled to a gating input (G) of the latch L, which for example has its data input (D) coupled to an enable signal EN, and a reset input receiving the reset signal RESET_GATE. The output of the latch L is the output signal CG, which is gated by the array clock A_CLK by the AND gate 840 like in Figure 8A, in order to generate the gated clock signal G_CLK.

The shift register 580C in the example of Figure 8B comprises five flip-flops FP1 to FP5 and an inverter 834 coupling the output Q of the fifth flip-flop FP5 to the data input D of the first flip-flop FP1. Thus, the timing edge propagated by the shift register 580C inverts its polarity on each cycle. The flip-flops FP1 to FP5 are for example reset by a reset signal RESET_N prior to the start of a new ToF detection phase.

The clock gate 580B in the example of Figure 8B comprises a polarity independent edge detector 832, which is for example configure to generate, in response to a rising or falling timing edge at the output of the inverter 834, the signal RESET_GATE. The signal RESET_GATE is for example configured to reset the latch L with an active low signal until a subsequent cycle.

The sampling flip-flops 520A of the TDC 520 for example comprise five flip-flops FP6 to FP10 having their data inputs D respectively coupled to the outputs of the flip-flops FP1 to FP5. All of the flip-flops FP6 to FP10 are for example clocked by the output signal EVENTS of the OR tree circuit 518, and are for example reset by the same signal RESET_N as the flip-flops of the shift register 580C.

The decoder 520B of the TDC 520 is for example configured to receive the outputs Q0 to Q4 of the flip-flops FP6 to FP10 respectively, and to perform thermometer to one-hot decoding in order to generate a four-bit TDC output signal TDC_OUT<3:0> for controlling the up/down counters 532. Furthermore, the circuit 520B is for example configured to detect rising and falling edges of the signals Q0 to Q4, as the polarity of these signals for example switches on alternate cycles.

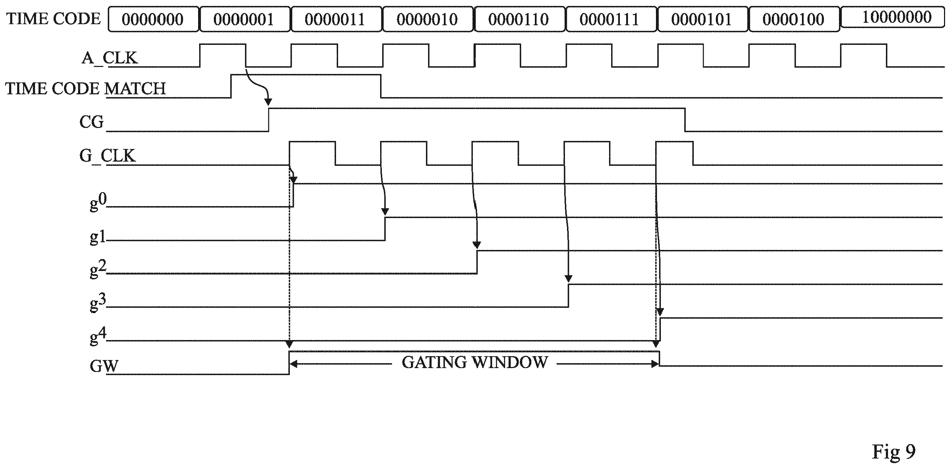

Operation of the circuit of Figure 8B will now be described in more detail with reference to Figure 9.

Figure 9 is a timing diagram representing operation of the time window generator of Figure 8B. Figure 9 illustrates in particular examples of the window position code sequence TIME CODE, the array clock A_CLK, the signals TIME CODE MATCH, CG, G_CLK, the timing signals g0 to g4, and a resulting gating window GW representing the detection window.

Figure 9 is based on an example in which the window position code signal is a 7-bit gray-coded value going from "0000000" to "1000000", and the reference window position of the pixel is "0000001". The signal TIME CODE MATCH is therefore asserted when the code sequence reaches the value "0000001", and the signal CG is asserted shortly after next falling edge of the signal A_CLK after the assertion of the signal TIME CODE MATCH. The signal G_CLK thus has a first rising edge at the first rising edge of the signal A_CLK following the assertion of the signal CG, and reproduces five periods of the signal A_CLK. The signals g0 to g4 thus have rising edges shortly after the first to fifth rising edges of the signal G_CLK. The rising edge of the signal g4 triggers the end of the detection window (GATING WINDOW). The signals g0 to g4 then remain high until a next light pulse period, during which they will comprising falling edges rather than rising edges.

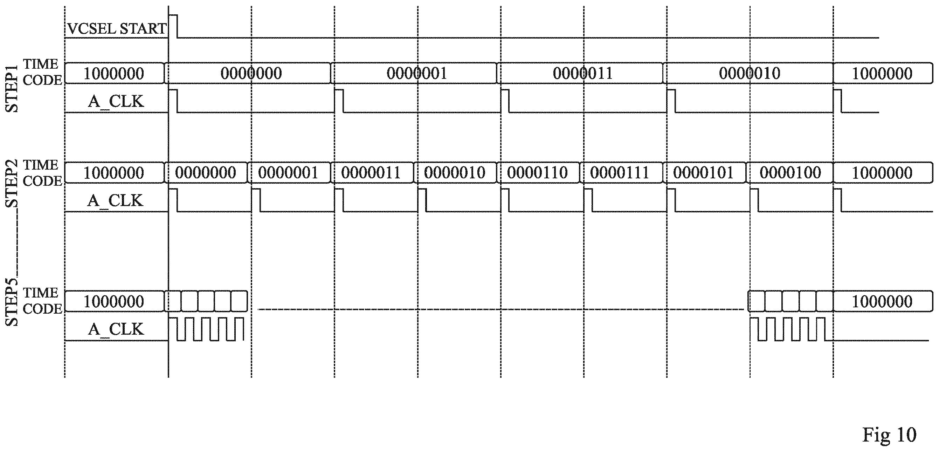

Figure 10 is a further timing diagram illustrating operation of the circuits of Figures 8A and 8B. Figure 10 illustrates examples of a first step (STEP 1), a second step (STEP 2) and a fifth step (STEP5) of the recursive approach that detects the peak time interval.

A signal VSCEL START is asserted at a time t0 to trigger the start of the first step STEP1, causing a light pulse to be emitted. The window position code sequence transitions, for example shortly before the time t0, from a final value "1000000" of a previous cycle to the first value "0000000" of the sequence, and then changes to a new value on each rising edge of the array clock A_CLK.

The second step STEP2 is similar to the first step, except that the period of the array clock A_CLK is reduced with respect to the first step, for example by a factor of two.

The third step STEP3 is similar to the second step, except that the period of the array clock A_CLK has for example been reduced several times with respect to the second step, for example by a factor of eight, e.g. by a factor of two between the second and third steps, by a factor of two between the third and fourth steps, and by a factor of two between the fourth and fifth steps.

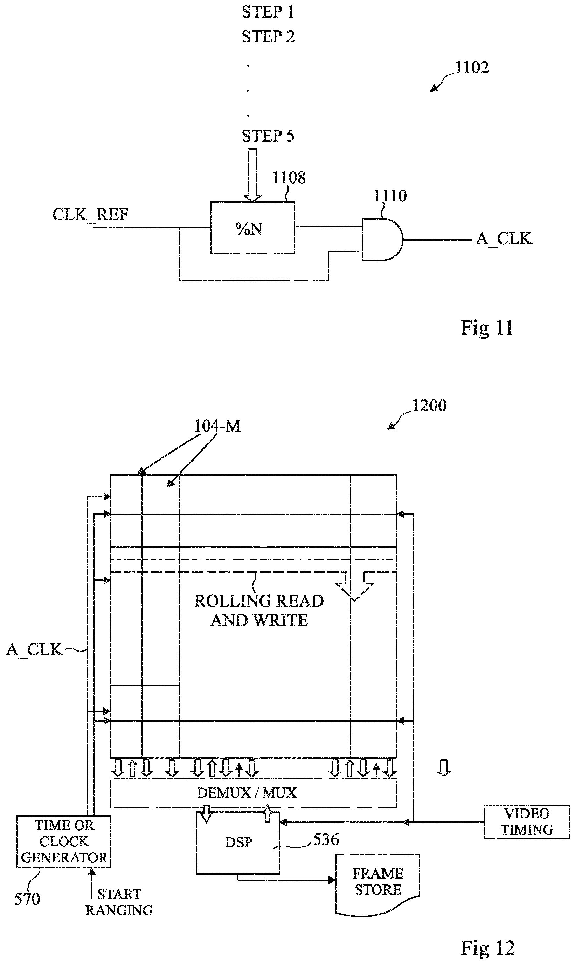

Figure 11 schematically illustrates a circuit for generating the array clock signal A_CLK of Figure 10.

In the example of Figure 11, an initial, for example high speed, clock signal (CK_REF), for example at around 1GHz, is generated and supplied to a frequency divider 1108 (%N) and to one input of an AND logic gate 1110, which receives the output signal of the frequency divider at its other input. The frequency divider 1108 is configured to divide the initial clock signal CLK_REF by a different divisor for each of the steps STEP1 to STEP5 of the method. For example, the divisor is equal to N for the first step STEP1, and is equal to: N/2 for the second step STEP2; N/4 for the third step STEP3; N/8 for the fourth step STEP4; and N/16 for the fifth step STEP5. More generally, the initial clock signal frequency is for example divided by $2^{(n-i)}$, where n is the number of successive steps of the recursive method to determine the peak time interval, and i is the rank of the ongoing step.

The output of the AND logic gate 1110 is for example the array clock signal A_CLK.

Figure 12 schematically illustrates a part 1200 of the ToF optoelectronic device 100 of Figure 1 in more detail according to an example embodiment of the present disclosure.

In the example of Figure 12, the light sensor comprises macro-pixels 104-M arranged in a matrix of column and rows. In an example, each macro-pixel comprises four SPADS for a dimension of about 20 microns. Smaller or larger dimensions are possible and depends of the technology nodes. Each macro-pixel is coupled, or preferably connected, to the timing window position code generator 570, which provides the time position codes. The array clock signal A_CLK is also provided to each of the macro-pixels. In an example, the speed of the clock is comprised between 60 MHz and 1 GHz. The timing window position code generator 570 is configured to receive a signal START R_ANGING triggering the start of a ToF ranging phase.

In the example of Figure 12, each pixel or macro-pixel is coupled, or preferably connected, to a multiplexer (N:1 mux) and a demultiplexer (1:N demux) to sort pixel data in both directions.

In an example, the multiplexer and/or demultiplexer are coupled, or preferably connected, to a pixel X&Y sequencer and a pixel binning computation engine for the iterative approach, this circuit for example being implemented by the DSP 536. Pixel binning is a process of combining adjacent pixels throughout an image, by summing or averaging their values, during or after readout. Charges from adjacent pixels in the sensor can be combined during readout to increase the line rate or frame rate.

In the example of Figure 12, the signal START RANGING is supplied to the pixel sequencer and binning engine, implemented for example by the DSP 536, to the pixels or macro-pixels rows, and to the generator 570, by a video timing generator (VIDEO TIMING).

After pixel data processing by the pixel X&Y sequencer and binning engine, the data frames are for example stored to a memory (FRAME STORE) of the device.

In the example of Figure 12, the macro-pixel array is scanned row by row in a rolling read and write process (ROLLING READ AND WRITE).

In another example, the illumination of the sensor is achieved in a global shutter manner, for example for a first region (half of area for example) of the array of pixels or macro-pixels, and then for another region (the other half for example). By doing so, the data of one half of pixels can be processed in a read-out phase while the other is in an acquisition phase.

An advantage of the described embodiments is that the time to digital converter is made to operate in an event-based manner, because the input to TDC is gated by a local comparator, leading to a low-energy solution.

An advantage of using a shift register to locally generate a timing sequence for controlling the TDC, wherein the shift register is clocked by a gated clock signal, is that energy consumed by the clocking of the shift register is relatively low. In particular, the shift register is not clocked when there is no match between the window position code sequence and the reference window position applied by the pixel for a given iteration.

Another advantage of the described embodiments resides in the fact that, between two steps of the recursive approach, the polarity of the time window control signals is alternated, which permits an averaging of any mismatches between rising and falling edge delays.

Various embodiments and variants have been described. Those skilled in the art will understand that certain features of these embodiments can be combined and other variants will readily occur to those skilled in the art. For example, while embodiments have been described in which there are four time intervals in each detection window, it will be apparent to those skilled in the art that a different number of time intervals could be used.

Finally, the practical implementation of the embodiments and variants described herein is within the capabilities of those skilled in the art based on the functional description provided hereinabove. In particular, the digital comparator 802 could be implemented in a different manner and replaced by another circuit which would provide a signal when the time position code is equal to a reference time position code. In another example, the time window control signals could be generated with another circuit different from a shift register, for example, a circuit which creates different time latencies in series.

**Claims**

1. An optoelectronic device comprising:

   - a light source (102) configured to emit light pulses periodically;
   - an array of pixels (104) configured to detect an amount of return light, wherein each pixel of the array is configured to detect an amount of return light falling in each of a subset of two or more time intervals among a set of time intervals distributed across the time period of the pulses, the subset of two or more time intervals forming a detection time window (704, 704', 704") of the pixel; and
   - a time window position code generator (575) configured to generate a sequence of time window position codes; each pixel comprising:
   - a memory (601) configured to store a first reference time window position associated with said pixel;
   - a time window code comparator (580A) configured to compare a first time window position code of said sequence with the first reference time window position; and
   - a timing sequence generator (580B, 580C) configured to generate, when the comparison indicates a match, at least one time window control signal (g0, g1, g2, g3, g4) configured to activate the detection of the return light during a detection time window (704, 704', 704") selected by the at least one time window control signal (g0, g1, g2, g3, g4).

2. The optoelectronic device of claim 1, wherein the detection time window (704, 704', 704") comprises a plurality of time intervals, and the timing sequence generator (580B, 580C) is configured to generate at least two of said time window control signals (g0, g1, g2, g3, g4).

3. The optoelectronic device of claim 1 or 2, wherein the detection time window (704, 704', 704") comprises four time intervals A, B, C and D, wherein the time intervals A and C are non-overlapping with each other, the time intervals B and D are non-overlapping with each other, the time interval A is overlapping with the time intervals B and D, and the time interval C is overlapping with the time intervals B and D.

4. The optoelectronic device of claim 3, wherein each pixel further comprises:

   - a first up/down counter (604) configured to be incremented during one of the intervals A and C, and to be decremented during the other of the intervals A and C; and
   - a second up/down counter (606) configured to be incremented during one of the intervals B and D, and to be decremented during the other of the intervals B and D.

5. The optoelectronic device of any of claims 1 to 4, wherein the time window code comparator (580A) comprises an AND logic gate (802) with a first input configured to receive the sequence of timing window position codes (720) and a second input configured to receive the first reference time window position.

6. The optoelectronic device of any of claims 1 to 5, wherein the timing sequence generator (580B, 580C) comprises:

   a shift register (580C) comprising at least two flip-flops (FP1, FP2, FP3, FP4) arranged in series, each flip-flop generating a corresponding one of the at least two time window control signals (g0, g1, g2, g3, g4), the time window control signals being configured to activate the detection, by the pixel, of the return light during the detection time window (704, 704', 704"), the at least two flip-flops of the shift register being clocked by a gated clock signal (G_CLK) activated by a pixel activation signal (A_CLK);
a logic gate (840) having a first input coupled to an output of the time window code comparator (580A) and a second input configured to receive the pixel activation signal (A_CLK), the output of the logic gate (840) being the gated clock signal (G_CLK).

7. The optoelectronic device of claim 6, wherein the timing sequence generator (580B, 580C) further comprises a latch (L) having a first input configured to receive a reset signal (RESET GATE) generated based on an output of the shift register, and a second input coupled to tan output of the time window code comparator (802) and an output coupled to the first input of the logic gate (740).

8. An optoelectronic device comprising:

   - a light source (102) configured to emit light pulses periodically;
   - an array of pixels (104) configured to detect an amount of return light, wherein each pixel of the array is configured to detect an amount of return light falling in each of a subset of two or more time intervals among a set of time intervals distributed across the time period of the pulses, the subset of two or more time intervals forming a detection time window (704, 704', 704") of the pixel; each pixel comprising:
   - a timing sequence generator (580B, 580C) comprising a shift register (580C) with at least two flip-flops (FP1, FP2, FP3, FP4) arranged in series, each flip-flop generating a corresponding time window control signal (g0, g1, g2, g3, g4), wherein:

      the time window control signals (g0, g1, g2, g3, g4) are configured to activate the detection, by the pixel, of the return amount of emitted light during a detection time window (704, 704', 704") selected by the time window control signals (g0, g1, g2, g3, g4);
      the flip-flops of the shift register (580C) are clocked by a gated clock signal (G_CLK) activated by a pixel activation signal (A_CLK); and
      a last flip-flop (FP5) of the shift register (580C) is configured to provide a reset signal (RESET GATE) for disabling the gated clock (840).

9. The optoelectronic device of claim 6, 7 or 8, wherein the shift register (580C) comprises four flip-flops (FP1, FP2, FP3, FP4) arranged in series, each of the four flip-flops generating a corresponding time window control signal (g0, g1, g2, g3, g4) at its respective output.

10. The optoelectronic device of claim 6, 7, 8 or 9, wherein a clock frequency of the pixel activation signal (A_CLK)is modified at alternate cycles.

11. The optoelectronic device of claim 10, wherein the clock frequency of the pixel activation signal (A_CLK)is multiplied by two at each of the alternate cycles.

12. An optoelectronic device comprising:

   - a light source (102) configured to emit light;
   - an array of pixels (104) configured to detect an amount of return light;
   wherein each pixel of the array is configured to detect, during each detection cycle among a plurality of detection cycles, an amount of return light falling in each of a subset of two or more time intervals among a set of time intervals distributed across the time period of the pulses, the subset of two or more time intervals forming a detection time window (704, 704', 704") of the pixel selected by at least one time window control signal (g0, g1, g2, g3, g4); and
   - a circuit comprising a time to digital converter (520) configured to be gated by rising edges and by falling edges of the at least one time window control signal (g0, g1, g2, g3, g4) on alternate detection cycles.

13. The optoelectronic device of claim 12, wherein each pixel comprises a plurality of photosensor and an OR tree circuit (518) coupling the photosensors to the time to digital converter (520) of the pixel.

14. The optoelectronic device of any of claims 1 to 13, wherein the time window position codes of the sequence are:

   - gray coded; or
   - binary coded; or

- unary coded; or
- provided by phase-shifted clock signals.

15. The optoelectronic device of any of claims 12 to 14, wherein each of the at least one time window control signal (g0, g1, g2, g3, g4) comprises a positive pulse shape at one of the alternate cycles and a negative pulse shape at the other of the alternate cycles.


**Amended claims in accordance with Rule 137(2) EPC.**

1. An optoelectronic device comprising:

   - a light source (102) configured to emit light pulses periodically;
   - an array of pixels (104) configured to detect an amount of return light, wherein each pixel of the array is configured to detect an amount of return light falling in each of a subset of two or more time intervals among a set of time intervals distributed across the time period of the pulses, the subset of two or more time intervals forming a detection time window (704, 704', 704") of the pixel; and
   - a time window position code generator (575) configured to generate a sequence of time window position codes; each pixel comprising:
   - a memory (601) configured to store a first reference time window position associated with said pixel;
   - a time window code comparator (580A) configured to compare a first time window position code of said sequence with the first reference time window position; and
   - a timing sequence generator (580B, 580C) configured to generate, when the comparison indicates a match, at least one time window control signal (g0, g1, g2, g3, g4) configured to activate the detection of the return light during a detection time window (704, 704', 704") selected by the at least one time window control signal (g0, g1, g2, g3, g4);
   the timing sequence generator (580B, 580C) comprising:

   a shift register (580C) comprising at least two flip-flops (FP1, FP2, FP3, FP4) arranged in series, each flip-flop generating a corresponding one of the at least two time window control signals (g0, g1, g2, g3, g4), the time window control signals being configured to activate the detection, by the pixel, of the return light during the detection time window (704, 704', 704"), the at least two flip-flops of the shift register being clocked by a gated clock signal (G_CLK) activated by a pixel activation signal (A_CLK); and
   a logic gate (840) having a first input coupled to an output of the time window code comparator (580A) and a second input configured to receive the pixel activation signal (A_CLK), the output of the logic gate (840) being the gated clock signal (G_CLK).

2. The optoelectronic device of claim 1, wherein the detection time window (704, 704', 704") comprises a plurality of time intervals, and the timing sequence generator (580B, 580C) is configured to generate at least two of said time window control signals (g0, g1, g2, g3, g4).

3. The optoelectronic device of claim 1 or 2, wherein the detection time window (704, 704', 704") comprises four time intervals A, B, C and D, wherein the time intervals A and C are non-overlapping with each other, the time intervals B and D are non-overlapping with each other, the time interval A is overlapping with the time intervals B and D, and the time interval C is overlapping with the time intervals B and D.

4. The optoelectronic device of claim 3, wherein each pixel further comprises:

   - a first up/down counter (604) configured to be incremented during one of the intervals A and C, and to be decremented during the other of the intervals A and C; and
   - a second up/down counter (606) configured to be incremented during one of the intervals B and D, and to be decremented during the other of the intervals B and D.

5. The optoelectronic device of any of claims 1 to 4, wherein the time window code comparator (580A) comprises an AND logic gate (802) with a first input configured to receive the sequence of timing window position codes (720) and a second input configured to receive the first reference time window position.

6. The optoelectronic device of any of claims 1 to 5, wherein the timing sequence generator (580B, 580C) further comprises a latch (L) having a first input configured to receive a reset signal (RESET GATE) generated based on an output of the shift register, and a second input coupled to tan output of the time window code comparator (802) and an output coupled to the first input of the logic gate (740) .

7. An optoelectronic device comprising:

- a light source (102) configured to emit light pulses periodically;
- an array of pixels (104) configured to detect an amount of return light, wherein each pixel of the array is configured to detect an amount of return light falling in each of a subset of two or more time intervals among a set of time intervals distributed across the time period of the pulses, the subset of two or more time intervals forming a detection time window (704, 704', 704") of the pixel; each pixel comprising:
- a timing sequence generator (580B, 580C) comprising a shift register (580C) with at least two flip-flops (FP1, FP2, FP3, FP4) arranged in series, each flip-flop generating a corresponding time window control signal (g0, g1, g2, g3, g4), wherein:

the time window control signals (g0, g1, g2, g3, g4) are configured to activate the detection, by the pixel, of the return amount of emitted light during a detection time window (704, 704', 704") selected by the time window control signals (g0, g1, g2, g3, g4);
the flip-flops of the shift register (580C) are clocked by a gated clock signal (G_CLK) activated by a pixel activation signal (A_CLK); and
a last flip-flop (FP5) of the shift register (580C) is configured to provide a reset signal (RESET GATE) for disabling the gated clock (840).

8. The optoelectronic device of claim 7, wherein the shift register (580C) comprises four flip-flops (FP1, FP2, FP3, FP4) arranged in series, each of the four flip-flops generating a corresponding time window control signal (g0, g1, g2, g3, g4) at its respective output.

9. The optoelectronic device of claim 7 or 8, wherein a clock frequency of the pixel activation signal (A_CLK) is modified at alternate cycles.

10. The optoelectronic device of claim 9, wherein the clock frequency of the pixel activation signal (A_CLK) is multiplied by two at each of the alternate cycles.

11. The optoelectronic device of any of claims 1 to 6, wherein the time window position codes of the sequence are:

- gray coded; or
- binary coded; or
- unary coded; or
- provided by phase-shifted clock signals.

12. The optoelectronic device of any of claims 1 to 11, wherein each of the at least one time window control signal (g0, g1, g2, g3, g4) comprises a rising edge after one of the light pulse period and a falling edge after a next light pulse period.

Fig 1

102

102-2

102-1

108

102-N

102-2N

102-i

102-N+1

102-NN

102-j

110

Fig 2

104

104-2

104-1

104-K

104-2K

104-i

104-K+1

104-KK

104-M

Fig 3

Fig 4

Fig 5

EP 4 390 459 A1

Fig 6

701

705 703

707 711

| B | D | B |
| A | C | |

704A 704B 704C 704D

16nS 32nS 48nS 64nS

704

Fig 7A

701'

705' 703'

713 711

707' 711'

| B | D | B |
| A | C | |

704A' 704B' 704C' 704D'

8nS 16nS 24nS 32nS

704'

Fig 7B

Fig 7C

EP 4 390 459 A1

Fig 8A

EP 4 390 459 A1

Fig 8B

| TIME CODE | 0000000 | 0000001 | 0000011 | 0000010 | 0000110 | 0000111 | 0000101 | 0000100 | 10000000 |
|---|---|---|---|---|---|---|---|---|---|

A_CLK

TIME CODE MATCH

CG

G_CLK

$g0$

$g1$

$g2$

$g3$

$g4$

GW                    ← GATING WINDOW →

Fig 9

Fig 10

STEP 1

STEP 2

.

.

.

STEP 5

1102

1108

1110

CLK_REF — %N — A_CLK

Fig 11

1200

104-M

ROLLING READ
AND WRITE

A_CLK

DEMUX / MUX

TIME OR
CLOCK
GENERATOR

DSP          536

VIDEO
TIMING

570   START
RANGING

FRAME
STORE

Fig 12

Europäisches
Patentamt

European
Patent Office

Office européen
des brevets

# EUROPEAN SEARCH REPORT

**Application Number**

EP 22 30 6982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/171036 A1 (MELLOT PASCAL [FR]) 2 June 2022 (2022-06-02) * paragraphs [0047], [0052], [0060], [0084], [0116], [0117], [0128], [0129], [0132], [0133]; figures 1, 2B, 9, 15 * | 1-15 | INV. G01S17/10 G01S17/894 G01S7/4863 G01S7/4865 G01S7/487 G04F10/00 |
| A | US 2021/302550 A1 (DUTTON NEALE [GB] ET AL) 30 September 2021 (2021-09-30) * paragraphs [0005], [0054], [0056], [0057]; figures 3B, 6, 7 * | 1,8,12 | |
| A | SEVERINI FABIO ET AL: "SPAD array for LiDAR with region-of-interest selection and smart TDC routing", PROCEEDINGS OF THE SPIE, SPIE, US, vol. 11771, 18 April 2021 (2021-04-18), pages 117710F-117710F, XP060143264, ISSN: 0277-786X, DOI: 10.1117/12.2592087 ISBN: 978-1-5106-5738-0 * abstract; figure 4 * | 1,8,12 | |

**TECHNICAL FIELDS SEARCHED (IPC)**

G01S
G04G
G04F

The present search report has been drawn up for all claims

| Place of search | Date of completion of the search | Examiner |
|---|---|---|
| Munich | 30 May 2023 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6982

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2023

| Patent document cited in search report | | Publication date | Patent family member(s) | | Publication date |
|---|---|---|---|---|---|
| US 2022171036 | A1 | 02-06-2022 | NONE | | |
| US 2021302550 | A1 | 30-09-2021 | CN | 113472353 A | 01-10-2021 |
| | | | EP | 3889694 A1 | 06-10-2021 |
| | | | US | 2021302550 A1 | 30-09-2021 |

EPO FORM P0459

For more details about this annex : see Official Journal of the European Patent Office, No. 12/82